# EUROPÄISCHE PATENTSCHRIFT

(11) **EP 0 659 270 B1**
(45) Veröffentlichungstag und Bekanntmachung des Hinweises auf die Patenterteilung: **09.04.1997**
(21) Anmeldenummer: 93919284.5
(22) Anmeldetag: 06.09.1993
(51) Int. Cl.: G01M 3/00, G01M 3/38, F17D 5/00, F16L 55/26

(54) **VERFAHREN UND VORRICHTUNG ZUR UNTERSUCHUNG SOWIE WARTUNG UND AUSBESSERUNG VON NEBENKANÄLEN, DIE VON EINEM HAUPTKANAL ABZWEIGEN**
PROCESS AND DEVICE FOR INSPECTING JUST AS SERVICING AND REPAIRING SUBSIDIARY CANALS BRANCHING OFF FROM A MAIN DRAIN
PROCEDE ET DISPOSITIF D'INSPECTION AUSSI BIEN QUE DE MAINTENANCE ET DE REPARATION DE CANAUX SECONDAIRES QUI DERIVENT D'UN EGOUT PRINCIPAL

(30) Priorität: 08.09.1992 DE 4229787; 08.07.1993 DE 9310192 U
(43) Veröffentlichungstag der Anmeldung: 28.06.1995
(73) Patentinhaber: KIPP, Jens-Werner, D-33659 Bielefeld (DE)
(72) Erfinder: KIPP, Jens-Werner, D-33659 Bielefeld (DE)
(74) Vertreter: TER MEER - MÜLLER - STEINMEISTER & PARTNER
(86) Internationale Anmeldenummer: EP9302412
(87) Internationale Veröffentlichungsnummer: WO9405989

(56) Entgegenhaltungen:
- EP-A- 0 183 134
- DE-A- 3 039 556
- DE-A- 3 614 046
- DE-C- 3 324 525
- GB-A- 2 228 644
- US-A- 4 651 558
- US-A- 4 735 501
- US-B- 4 735 501
- Kanal-Müller-Gruppe-Info 'TV-Kanal-Untersuchung und Dokumentation'

## Beschreibung

Die Erfindung betrifft ein Verfahren und eine Vorrichtung für Kanaluntersuchungen mit einer Kamerasonde.

Bei der Untersuchung von Abwasserkanälen und dergleichen ist es bekannt, eine auf einem selbstfahrenden Wagen oder an einer Schubstange montierte Fernsehkamera in den Kanal einzuführen, so daß die Wand des Kanalrohres mit Hilfe der Fernsehkamera inspiziert werden kann. Hierzu ist die Fernsehkamera durch ein Kabel mit einem außerhalb des Kanals installierten Monitor verbunden.

Andererseits ist es zur Beseitigung von Verstopfungen oder zum Reinigen von Kanälen bekannt, eine mit Düsen bestücke Spüllanze in den Kanal einzuführen und die Kanalrohre mit unter hohem Druck von der Spüllanze abgegebenen Wasserstrahlen zu reinigen.

Bei der Untersuchung von Kanalsytemen besteht gelegentlich das Bedürfnis, nicht nur den Hauptkanal zu inspizieren, sondern mit einer Kamerasonde auch in die von dem Hauptkanal abzweigenden Nebenkanäle mit engerem Querschnitt einzudringen.

Hierzu ist es bekannt, die Kamera auf einem lenkbaren Fahrwagen zu montieren, der auch in die Nebenkanäle hineingelenkt werden kann. Dies ist Jedoch nur bei Nebenkanälen möglich, die seitlich von dem Hauptkanal abzweigen. Nebenkanäle, die aufwärts oder schräg aufwärts von dem Hauptkanal abgehen, können auf diese Weise nicht erreicht werden. Ein weiterer Nachteil besteht darin, daß sich der Reibungswiderstand des von dem Kamerawagen nachgezogenen Kabels an den Abknickstellen beträchtlich erhöht, so daß die Zugkraft der relativ kleinen und leichten Kamerawagen nicht ausreicht, tief in die Nebenkanäle vorzudringen. Außerdem kann der Kamerawagen leicht an Hindernissen steckenbleiben.

Bei einem anderen bekannten System ist auf dem im Hauptkanal verfahrbaren Kanalwagen eine antreibbare Trommel installiert, auf der eine halbsteife Schubstange aufgewickelt ist, mit der sich eine kleine Kamerasonde in die Nebenkanäle vorschieben läßt. Auch bei diesem Verfahren werden Jedoch nur relativ geringe Eindringtiefen erreicht, da sich aufgrund der Flexibilität der Schubstange keine großen Eindringwiderstände überwinden lassen.

Aus DE 38 03 274 A1 und DE 91 05 211 U1 sind Verfahren und Vorrichtungen zur Untersuchungen von Nebenkanälen nach dem Oberbegriff des Anspruchs 1 bzw. des ersten Vorrichtungsanspruchs 3 bekannt, bei denen ein üblicher Kamerawagen mit einem Umlenkgestell mit Umlenk- und Antriebsrollen versehen ist, mit dem sich die am vorderen Ende einer biegsamen Welle oder eines halbsteifen Kamerakabels angeordnete Kamera, deren Objektiv normalerweise in Richtung der Achse des Hauptkanalrohres nach vorn gerichtet ist, in einen abzweigenden Nebenkanal einschwenken und dann an dem Kamerakabel bzw. der Welle in den Nebenkanal vorschieben läßt. Bei diesem Verfahren treten jedoch ebenfalls die obengenannten Probleme auf. so daß man nur über eine begrenzte Strecke in den Nebenkanal vordringen kann.

In DE 38 77 721 T2 wird eine Strahldüse beschrieben, mit der sich ein zur Untersuchung von Kanalrohren dienender Kamerwagen nach dem Rückstoßprinzip antreiben läßt. Dieser rückstoßgetriebene Kamerawagen ist jedoch nicht für den Einsatz in Nebenkanälen geeignet, da er nicht wendig genug ist und nicht in abzweigende Nebenkanäle hineindirigiert werden kann, insbesondere dann nicht, wenn die Nebenkanäle schräg nach oben vom Hauptkanal abgehen.

Der Erfindung liegt die Aufgabe zugrunde, ein Verfahren und eine Vorrichtung zu schaffen, die es gestatten, mit der Kamerasonde tiefer in die von dem Hauptkanal abzweigenden Nebenkanäle vorzudringen und etwaige Hindernisse zu überwinden.

Diese Aufgabe wird mit den in den Ansprüchen 1 und 4 angegebenen Merkmalen gelöst.

Erfindungsgemäß ist die Kamerasonde mit Rückstoßdüsen versehen und an einen Schlauch zur Zufuhr eines Druckmediums zu den Rückstoßdüsen angeschlossen. Durch den Vortrieb der Kamerasonde nach dem Rückstoßprinzip läßt sich mit geringem baulichen Aufwand und bei äußerst kleinen Abmessungen der Kamerasonde eine hohe Antriebskraft erzeugen, so daß die Kamerasonde problemlos in enge Nebenkanäle eindringt und dabei auch große Steigungen überwinden und das Kamerakabel und den Schlauch für das Druckmedium über weite Längen nachziehen kann. Anders als bei Kamerawagen mit angetriebenen Rädern oder Raupen wird die Vortriebskraft nicht durch einen schlüpfrigen Schmutzbelag an den Kanalwänden beeinträchtigt. Da andererseits die Vortriebskraft unmittelbar an der Kamerasonde erzeugt wird, ist die Gefahr, daß die Sonde an Vorsprüngen oder Versätzen in der Kanalwand hängen bleibt, wesentlich kleiner als bei Systemen, bei denen die Sonde mit einer Schubstange vorgeschoben wird.

Als Druckmedium zur Erzeugung des notwendigen Rückstoßes können sowohl Druckluft als auch Wasser verwendet werden. Insbesondere bei der Verwendung von Wasser wird zugleich eine Reinigung der Rohrwände erreicht. Es ist deshalb beispielsweise möglich, die Rohrwand beim Einfahren der Kamerasonde zu reinigen und dann beim Zurückziehen der Sonde die von Schmutzverkrustungen befreite Rohrwand zu inspizieren, so daß Schadstellen besser erkannt werden können.

Vorteilhafte Weiterbildungen und Ausgestaltungen der Erfindung sind in den Unteransprüchen angegeben.

Bevorzugt sind die Rückstoßdüsen auf einem Kranz angeordnet, der das wasserdichte Gehäuse einer herkömmlichen Kamerasonde an ihrem Umfang in geringem Abstand zum vorderen Ende umgibt, und die Düsenöffnungen sind schräg nach rückwärts auf die Rohrwand gerichtet. Durch diese Bauweise wird erreicht, daß die Kamerasonde durch die Düsenstrahlen auf Abstand zur Rohrwand gehalten wird, so daß Vorsprünge und Unebenheiten der Rohrwand leichter überwunden werden können und das Objektiv der Kamera weniger leicht verschmutzt wird. Außerdem wird so auch in Kanalrohren, deren Innendurchmesser deutlich größer ist als der Durchmesser der Kamerasonde, eine annähernde Selbstzentrierung der Kamerasonde auf die Rohrachse erreicht, so daß die Rohrwand auf ihrem gesamten Umfang gleichermaßen gut inspiziert werden kann.

Außerdem ist es vorteilhaft, das Kamerakabel unmittelbar in den Schlauch für das Druckmedium zu integrieren, so daß von der Sonde nur ein einziger Versorgungsstrang nachgezogen zu werden braucht. Beispielsweise kann das Kamerakabel durch das Innere des Schlauches verlaufen, oder die Adern des Kamerakabels können in die druckfeste Ummantelung des Schlauches integriert sein.

Andererseits ist es denkbar, an die Kamerasonde mehrere Schläuche mit entsprechend kleinerem Querschnitt anzuschließen, so daß einzelne Rückstoßdüsen oder Gruppen von Rückstoßdüsen getrennt angesteuert werden können. Hierdurch wird eine Lenkbarkeit der Kamerasonde erreicht, so daß sich die Sonde in die Nebenkanäle hineindirigieren läßt. Der gleiche Effekt läßt sich auch dadurch erreichen, daß in der Kamerasonde ein oder mehrere elektrisch, hydraulisch oder durch Seilzug betätigte Ventile zur Ansteuerung der Rückstoßdüsen angeordnet sind, oder daß schwenkbare Rückstoßdüsen vorgesehen werden.

Eine weitere, derzeit als besonders vorteilhaft angesehene Möglichkeit, die Kamerasonde in den vom Hauptkanal abzweigenden Nebenkanal zu dirigieren, besteht darin, daß in dem Hauptkanal an der Abzweigstelle des Nebenkanals ein Umlenkgestell fixiert wird, das die Kamera in den Nebenkanal leitet.

Im einfachsten Fall besteht das Umlenkgestell aus einem zylindrischen Block, dessen Querschnitt etwa dem Querschnitt des Hauptkanals entspricht und der an seinem rückwärtigen Ende abgeschrägt ist, so daß er eine Leitfläche für die Kamerasonde bildet. Der Block wird mit einer exzentrisch angeordneten Schubstange in den Hauptkanal eingeschoben, bevor die Kamerasonde in den Hauptkanal eingeführt wird. Wenn mit Hilfe der Kamerasonde ein Abzweig am Hauptkanal entdeckt wird, so wird der Block an der Schubstange festgehalten und so gedreht, daß seine Leitfläche auf den abzweigenden Nebenkanal gerichtet ist. Anschließend wird der Kameraschlauch nachgelassen, so daß die Kamerasonde in den Nebenkanal eindringt.

In einer anderen Ausführungsform ist das Umlenkgestell an einem herkömmlichen Kamerawagen für den Hauptkanal montiert. In diesem Fall kann der Kameraschlauch für die in den Nebenkanal einzuführende Kamerasonde von einer auf dem Kamerawagen montierten Trommel abgewickelt werden oder, sofern der Schlauch vom Schacht aus zugeführt wird, mittels eines Klemmrollenantriebs oder dergleichen vom Kamerawagen aus nachgezogen werden. Die Rückstoßdüsen an der Kamerasonde brauchen dann nur den Reibungswiderstand des durch den Nebenkanal verlaufenden Schlauchabschnitts zu überwinden.

Der Fahrantrieb des Hauptkanal-Kamerawagens muß in diesem Fall allerdings eine gute Traktion aufweisen, da zusätzlich zu dem Kabel der Hauptkanal-Kamera auch der Schlauch und ggf. das gesonderte Kabel für die Nebenkanal-Kamerasonde durch den Hauptkanal nachgezogen werden müssen und außerdem beim Antrieb des Schlauches zusätzliche Zugkräfte auf den Kamerawagen ausgeübt werden. Es ist deshalb zweckmäßig, den Kamerawagen mit in Abhängigkeit von der Zugkraft spreizbaren Klauen oder Rollenfüßen im Hauptkanal zu verspannen.

Gemäß einer besonders vorteilhaften Ausgestaltung des erfindungsgemäßen Verfahrens wird an der mit Rückstoßdüsen versehenen Kamerasonde ein Ortungsgerät angebracht, dessen Ortungssignale sich überirdisch vermessen lassen und somit die Lage der in den Kanal eingeführten Sonde angeben. Auf diese Weise läßt sich die Position der mit Hilfe der Kamera festgestellten Schadstellen präzise vermessen. Sofern mit einer Kombination aus Kamera und Ortungsgerät gearbeitet wird, lassen sich in einem Arbeitsgang gleichzeitig mit der Untersuchung des Zustands der Kanäle auch präzise und detaillierte Lagepläne der Kanäle erstellen. Hierdurch wird die Planung von Sanierungsarbeiten bei einem durch die Kanalunterschung festgestellten Sanierungsbedarf wesentlich erleichtert. Die mit Hilfe des Ortungsgerätes gewonnenen Meßdaten können elektronisch in einem CAD-System zur Erstellung der Lagepläne verarbeitet werden, und die so gewonnenen Daten können in ein elektronisches Kanalkataster eingegeben werden, so daß zu den in dem Kataster aufgenommenen Hauptkanälen jederzeit präzise Informationen über die Lage und den Zustand der Nebenkanäle abrufbar sind.

Im folgenden werden bevorzugte Ausführungsbeispiele der Erfindung anhand der Zeichnungen näher erläutert.

Es zeigen:
- Fig. 1: ein Ausführungsbeispiel der erfindungsgemäßen Vorrichtung in einem Hauptkanal, von dem ein Nebenkanal abzweigt,
- Fig. 2: eine schematische Stirnansicht des Hauptkanal-Kamerawagens;
- Fig. 3: einen Teil-Längsschnitt des Kamerawagens nach Figur 3;
- Fig. 4: eine Seitenansicht einer Vorrichtung gemäß einem weiteren Ausführungsbeispiel;
- Fig. 5: eine Stirnansicht der Vorrichtung nach Figur 4;
- Fig. 6: einen Schnitt durch eine Lafette für eine Kamerasonde bei der Vorrichtung nach Figur 4;
- Fig. 7: einen Schnitt durch einen Rohrabzweig mit einem Umlenkblock für eine Kamerasonde;
- Fig. 8: eine in einem Schlauch der Kamerasonde angeordnete Schleppdüse;
- Fig. 9: einen axialen Schnitt durch eine Kamerasonde mit Ortungsgerät;
- Fig. 10: eine Frontansicht der Kamerasonde gemäß Figur 9; und
- Fig. 11: einen Schnitt durch eine Kamerasonde mit Ortungsgerät gemäß einem abgewandelten Ausführungsbeispiel.

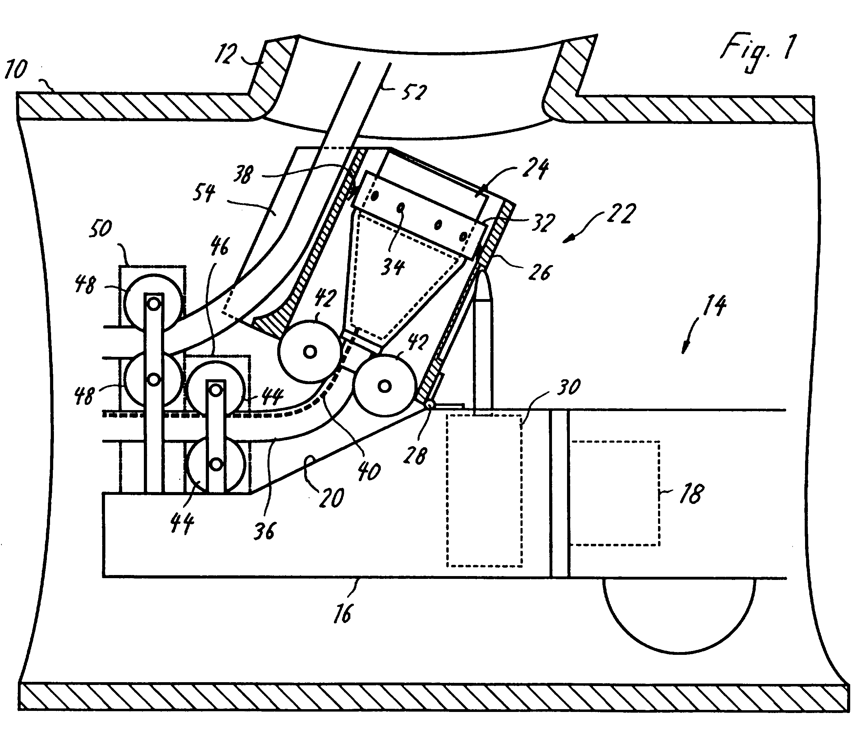

In Figur 1 ist ein Längsschnitt durch ein Hauptkanalrohr 10 gezeigt, von dem ein Nebenkanalrohr 12 nach oben abzweigt. In dem Hauptkanalrohr 10 ist ein Kamerawagen 14 verfahrbar, dessen Konstruktion grundsätzlich bekannt ist und von dem deshalb in der Zeichnung lediglich der rückwärtige Teil dargestellt ist. Am vorderen Ende des Kamerawagens 14 ist eine nicht gezeigte Hauptkanal-Kamera zur Inspektion des Hauptkanalrohres 10 montiert. Von dem Kamerawagen 14 führt ein nicht gezeigtes Kabel durch das Hauptkanalrohr 10 zu einem Schacht, von dem aus der Kamerawagen 14 gestartet wurde. Über dieses Kabel wird der Antrieb des Kamerawagens mit Strom versorgt, und außerdem werden die Signale der Hauptkanal-Kamera sowie Steuersignale für den Betrieb der Kamera und des Kamerawagens 14 durch dieses Kabel übermittelt.

Am rückwärtigen Ende des Kamerawagens 14 ist eine Welle 16 montiert, die mit Hilfe eines Elektro- oder Hydraulik-Motors 18 um ihre parallel zur Achse des Hauptkanalrohres 10 verlaufende Achse drehbar ist. Die Welle 16 ist an ihrem rückwärtigen Ende abgeflacht und bildet eine Plattform 20, auf der ein Umlenkgestell 22 für eine Kamerasonde 24 zur Inspektion des Nebenkanalrohres 12 montiert ist.

Das Umlenkgestell 22 wird im wesentlichen durch eine rohrförmige Lafette 26 gebildet, die durch ein Scharnier 28 schwenkbar mit der Welle 16 verbunden ist. Die Schwenkbewegung der Lafette 26 wird durch einen Luftzylinder oder Hydraulikzylinder 30 gesteuert.

Die Kamerasonde 24 weist ein wasserdichtes Gehäuse bekannter Bauart auf, das eine nicht gezeigte Fernsehkamera derart aufnimmt, daß ein vor der Stirnfläche der Kamerasonde, rechts oben in Figur 1, gelegener Bereich mit einem relativ weiten Öffnungswinkel von der Kamera erfaßt wird. In dem in Figur 1 gezeigten Zustand liegt somit die Mündung des Nebenkanalrohres 12 im Blickfeld der Kamera in der Kamerasonde 24.

Das Gehäuse der Kamerasonde 24 ist von einem Düsenkranz 32 umgeben, der eine Anzahl schräg nach außen und nach hinten in bezug auf die Achse der Kamerasonde 24 gerichteter Düsenöffnungen 34 aufweist. Der Düsenkranz 32 ist am rückwärtigen Ende der Kamerasonde 24 mit einem hochdruckfesten Schlauch 36 verbunden, über den ein Druckmedium, beispielsweise Wasser, unter hohem Druck zugeführt wird, so daß es strahlförmig aus den Düsenöffnungen 34 austritt, wie in Figur 1 durch Düsenstrahlen 38 symbolisiert wird. Ein Kamerakabel 40 für die Stromversorgung der Kamerasonde 24 und die Übermittlung der Kamerasignale ist in den Schlauch 36 integriert. Am unteren Ende der Lafette 26 sind zwei Führungsrollen 42 angeordnet, die den Schlauch 36 zwischen sich aufnehmen. Außerdem wird der Schlauch 36 klemmend zwischen zwei Antriebsrollen 44 gehalten, die auf der Plattform 20 montiert sind und über einen in der Welle 16 untergebrachten nicht gezeigten Motor sowie ein in der Zeichnung lediglich strichpunktiert angedeutetes Getriebe 46 gegensinnig antreibbar sind.

Zwei weitere Antriebsrollen 48 mit zugehörigem Getriebe 50 sind gegenüber den Antriebsrollen 44 nach oben versetzt auf der Plattform 20 angeordnet und nehmen einen Spülschlauch 52 zwischen sich auf. Der Spülschlauch 52 läuft durch eine außen an der Lafette 26 angebrachte Führungsrinne 54 in das Nebenkanalrohr 12 und trägt an seinem freien Ende eine nicht gezeigte Spüldüse zur Reinigung des Nebenkanalrohres.

Das Umlenkgestell 22 ist insgesamt so gestaltet und angeordnet, daß es auch bei unterschiedlichen Schwenklagen der Lafette 24 in einem Hauptkanalrohr 10 mit verhältnismäßig engem Querschnitt Platz findet. Sofern in engen Kanälen der Kamerawagen 14 selbst nicht ausreichend Platz für die Anbringung des Umlenkgestells freiläßt, kann das Umlenkgestell auch als eine Art Anhänger zu dem Kamerawagen gestaltet sein.

Nachfolgend soll die Wirkungsweise der oben beschriebenen Vorrichtung erläutert werden.

Der selbstfahrende Kamerawagen 14 fährt ferngesteuert in das Hauptkanalrohr 10 ein, bis die am vorderen Ende des Kamerawagens montierte Hauptkanal-Kamera den Abzweig des Nebenkanalrohres 12 erfaßt. Anhand des Kamerabildes auf dem Monitor steuert die Bedienungsperson den Motor 18 derart, daß die Welle 16 so gedreht wird, daß der Azimut der Lafette 26 mit dem Azimut der Mündung des Nebenkanalrohres 12 übereinstimmt. Anschließend wird der Kamerawagen 14 weiter vorgefahren und dabei das von der Kamerasonde 24 gelieferte Bild beobachtet, bis der Kamerawagen die in Figur 1 gezeigte Stellung erreicht und die Mündung des Nebenkanalrohres 12 auf den mit der Kamerasonde 24 verbundenen Bildschirm erscheint. Mit Hilfe des Hydraulikzylinders 30 wird dann die Lafette 26 so geschwenkt, daß ihre Achse annähernd parallel zur Achse des Nebenkanalrohres 12 verläuft.

Danach wird mit Hilfe der Antriebsrollen 48 der Spülschlauch 52 ausgefahren, so daß die daran angebrachte Spüldüse durch die Führungsrinne 54 in das Nebenkanalrohr 12 geleitet wird. Das korrekte Einführen der Spülschlauches 52 in das Nebenkanalrohr 12 kann mit Hilfe der Kamerasonde 24 überwacht werden. Danach wird das Nebenkanalrohr 12 mit Hilfe des Spülschlauches 52 gespült, Sofern das Nebenkanalrohr nach oben abgeht, wie in Figur 1 gezeigt ist, ist es zweckmäßig, den Kamerawagen vorher ein Stück vorzufahren (nach rechts in Figur 1), damit die Kamerasonde 24 nicht durch das aus dem Nebenkanalrohr 12 herauslaufende Spülwasser verschmutzt wird. Die Vorwärtsbewegung des Spülschlauches 52 in dem Nebenkanalrohr 12 wird zum Teil durch die Antriebsrollen 48 und zusätzlich durch den Rückstoß der nicht gezeigten Spüldüse bewirkt. Nachdem das Nebenkanalrohr 12 gesäubert ist, wird der Spülschlauch 52 zurückgezogen, bis das mit der Spüldüse versehene Ende in der Führungsrinne 54 liegt. Der Kamerawagen 14 wird so positioniert, daß die Mündung der rohrförmigen Lafette 26 exakt auf die Achse des Nebenkanalrohres 12 gerichtet ist.

Wenn anschließend die Druckwasserzufuhr über den Schlauch 36 eingeschaltet wird, so dringt die Kamerasonde 24 aufgrund des von den Düsenstrahlen 38 erzeugten Rückstoßes im Nebenkanalrohr 12 vor, und die zuvor gesäuberte Rohrwand kann mit Hilfe der Kamera inspiziert werden. Während des Vortriebs der Kamerasonde 24 wird der Schlauch 36 mit Hilfe der Antriebsrollen 44 nachgezogen, so daß die mit Hilfe der Rückstoßdüsen 34 erzeugte Antriebskraft lediglich für den zwischen der Kamerasonde 24 und den Antriebsrollen 44 gelegenen Abschnitt des Schlauches 36 benötigt wird. Durch die Führungsrollen 42 wird sichergestellt, daß der Schlauch 36 nicht an der Kante der Lafette 26 beschädigt wird.

Auf die oben beschriebene Weise lassen sich mit Hilfe der erfindungsgemäßen Vorrichtung Nebenkanalrohre bis zu einer großen Tiefe inspizieren, wobei sich die Vorrichtung durch Drehung der Welle 16 und Schwenken der Lafette 26 an beliebige Abgangsrichtungen des Nebenkanalrohres anpassen läßt. Wenn die Untersuchung eines Nebenkanalrohres abgeschlossen ist, wird die Kamerasonde 24 wieder in die in Figur 1 gezeigte Stellung zurückgezogen, und der Kamerawagen 14 fährt zum Abzweig des nächsten Nebenkanalrohres, wo die gleiche Untersuchungsprozedur wiederholt wird. Die Antriebsrollenpaare 44 und 48 lassen sich beispielsweise durch Verwendung selbsthaltender Antriebsmotoren oder durch geeignete Kupplungen oder Gesperre derart fixieren, daß die Schläuche 36 und 52 bei der Vorwärtsfahrt des Kamerawagens 14 festgehalten und nachgezogen werden.

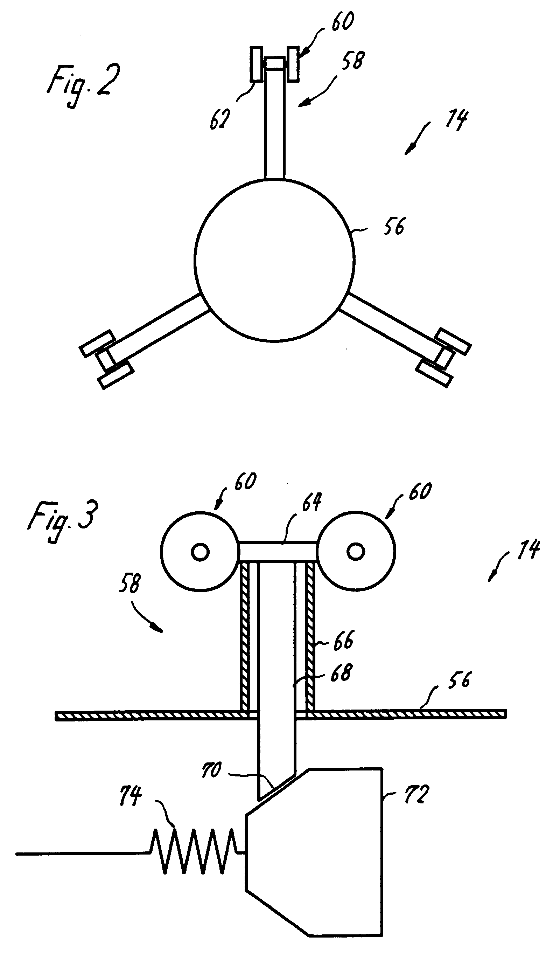

Da bei der Vorwärtsfahrt des Kamerawagens 14 außer den beiden Schläuchen 36 und 52 auch das nicht gezeigte Versorgungskabel für den Kamerawagen 14 nachgezogen werden muß, können bei längeren Hauptkanalstrecken relativ hohe Zugkräfte auftreten, so daß der Kamerawagen 14 eine entsprechend gute Traktion aufweisen muß. Außerdem kann es auch beim Vortrieb der Schläuche 36,52 mit Hilfe der Antriebsrollenpaare 44 und 48 notwendig werden, den Kamerawagen 14 fest im Hauptkanalrohr 10 zu fixieren, um die auftretenden Reaktionskräfte aufzufangen. Für diese Zwecke eignet sich die schematisch in Figuren 2 und 3 gezeigte Konstruktion des Kamerawagens 14.

Gemäß Figur 2 weist der Kamerawagen 14 ein zylindrisches Gehäuse 56 auf, von dessen Umfang in Radialrichtung wenigstens drei in gleichmäßigen Winkelabständen angeordnete Rollenfüße 58 ausgehen. Jeder Rollenfuß 58 trägt am freien Ende zwei in Axialrichtung des Gehäuses 56 hintereinander angeordnete Rollensätze 60 mit je zwei Rollen 62, die auf der Innenfläche des Hauptkanalrohres abrollen. Das Gehäuse 56 wird somit koaxial in dem Hauptkanalrohr gehalten. Die Rollenfüße 58 sind vorzugsweise längenverstellbar oder teleskopierbar und nach außen vorgespannt, so daß sich der Kanalwagen 14 an unterschiedliche Rohrdurchmesser anpassen läßt.

Jeder Rollensatz 60 weist wenigstens eine angetriebene Rolle 62 auf, damit ein gleichmäßiger Vortrieb des Kamerawagens 14 auch dann noch sichergestellt ist, wenn einer der Rollensätze 60 vorübergehend den Kontakt zu der Rohrinnenwand verliert, beispielsweise beim Überfahren eines Abzweigs. Der Abstand zwischen den Rollensätzen 60 jedes Rollenfußes ist vorzugsweise größer als der Durchmesser der von dem Hauptkanalrohr abzweigenden Nebenkanalrohre. Wahlweise kann jeder Rollensatz 60 auch aus mehreren Rollenpaaren bestehen, die in Längsrichtung des Hauptkanalrohres gegeneinander versetzt sind. Ein die Rollensätze 60 miteinander verbindender Rahmen 64 ist vorzugsweise schwenkbar am Schaft des Rollenfußes 58 gelagert, damit die Rollen 62 besser über Hindernisse wie Verkrustungen an der Rohrwand oder Versätze an Muffenverbindungen hinwegrollen können.

Da sich der Kanalwagen 14 mit der in Figur 2 gezeigten Konstruktion fest in dem Hauptkanalrohr verspannen läßt, können relativ hohe Zugkräfte aufgenommen werden.

Figur 3 zeigt einen Mechanismus, mit dem sich die Anpreßkraft der Rollensätze 60 gegen die Rohwand in Abhängigkeit von der Zugkraft verstärken läßt. Der Rollenfuß 58 weist ein Außenrohr 66 auf, in dem eine mit dem Rahmen 64 verbundene Druckstange 68 verschiebbar geführt ist. Die Druckstange 68 erstreckt sich in das Innere des Gehäuses 56 und stützt sich dort mit einer Schrägfläche 70 an einem Konus 72 ab. Der Konus 72 ist koaxial in dem Gehäuse 56 gehalten und in Axialrichtung beweglich und stützt in gleicher Weise auch die Druckstangen der beiden übrigen Rollenfüße 58 ab.

Die auf den Kamerawagen 14 wirkenden Zugkräfte, also beispielsweise die Zugkraft des Versorgungskabels und die an den Antriebsrollen 44 und 48 in Figur 1 angreifenden Zugkräfte der Schläuche 36 und 52, wirken über eine Zugfeder 74 auf das verjüngte Ende des Konus 72. Somit führt eine erhöhte Zugkraft zu einer axialen Bewegung des Konus 72 und somit zu einer radialen Auswärtsbewegung der Druckstangen 68, so daß die Rollensätze 60 fester gegen die Rohrwand gespannt werden. Anstelle eines mechanischen Spreizmechanismus mit dem Konus 72 kann auch ein hydraulischer Spreizmechanismus vorgesehen sein, der einen druckerzeugenden Zylinder, dessen Kolben mit der Zugkraft beaufschlagt wird, sowie mit dem druckerzeugenden Zylinder verbundene Spreizzylinder zum Ausfahren der Rollenfüße aufweist.

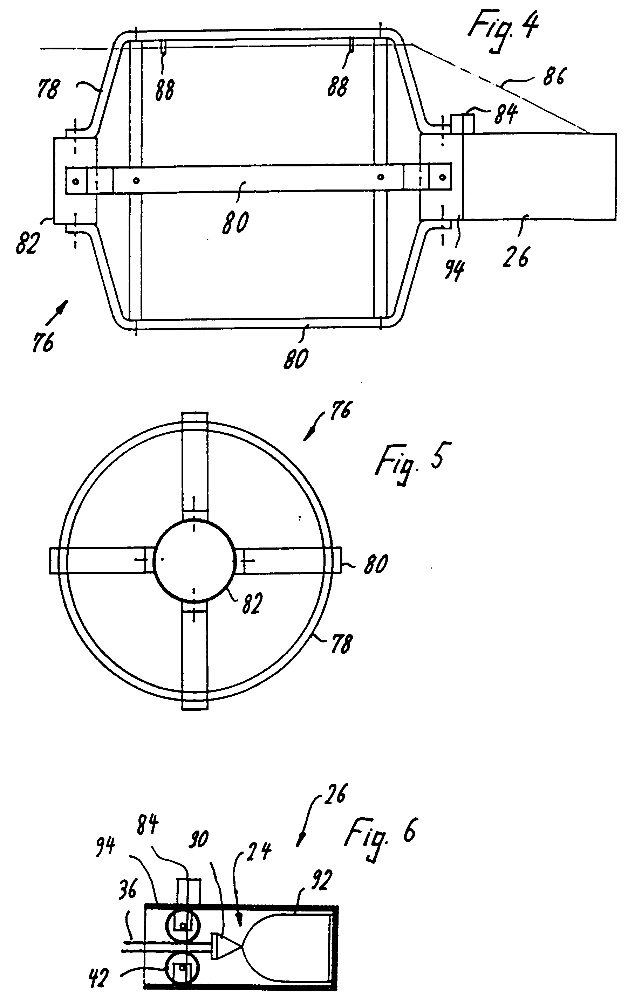

Figuren 4 bis 6 zeigen ein Umlenkgestell 76, das unabhängig von einem Kamerawagen einsetzbar ist. Das Umlenkgestell 76 weist ein korbartiges zylindrisches Gehäuse 78 auf, dessen größter Durchmesser etwas kleiner ist als der Innendurchmesser des Hauptkanalrohres und das auf Kufen 80 gleitend im Hauptkanalrohr verschiebbar ist. Der Antrieb erfolgt beispielsweise über eine Schubstange, die an eine Muffe 82 am linken Ende des Gehäuses 78 in Figur 4 ankoppelbar ist. Wahlweise können jedoch an den Kufen 80 auch motorgetriebene Antriebsräder angeordnet sein.

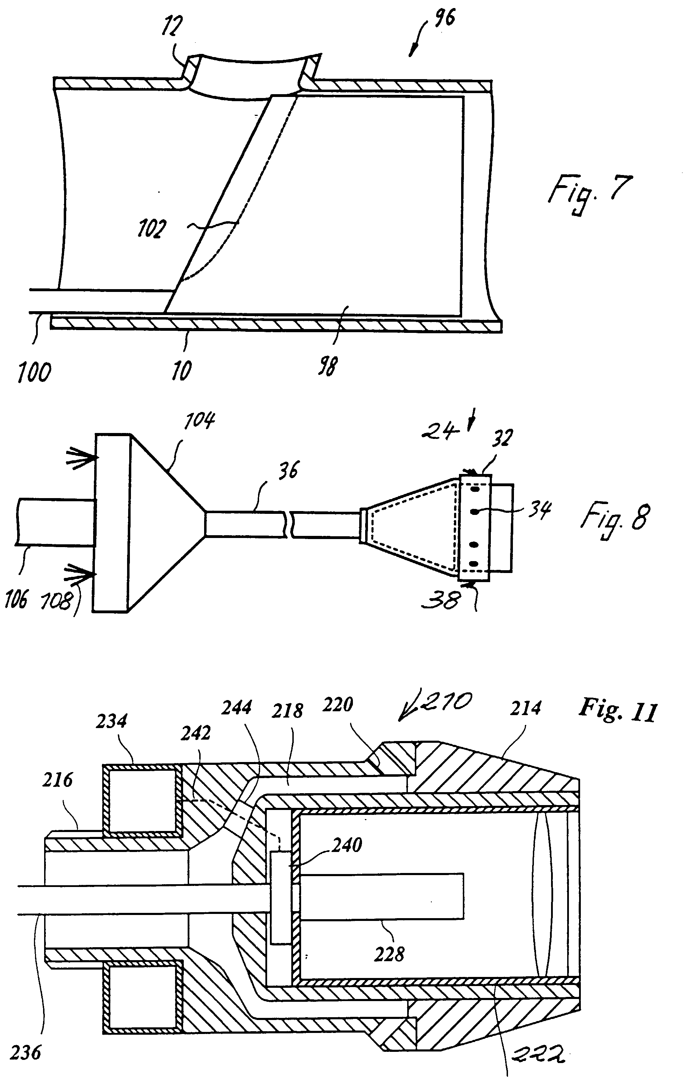

An dem der Muffe 82 entgegengesetzten Gehäuseende ist über ein Scharnier 84 die rohrförmige Lafette 26 für die Kamerasonde 24 (Figur 6) angelenkt. Zum Schwenken der Lafette 26 um die Achse des Scharniers 84 dient ein Zugseil 86, das durch Ösen 88 an einer der Kufen 80 läuft.

Bei dem in Figur 6 gezeigten Ausführungsbeispiel der Kamerasonde 24 sind die Rückstoßdüsen nicht am Umfang des Gehäuses 92 der Kamerasonde, sondern in einem separaten Düsenkopf 90 am rückwärtigen Ende des Gehäuses 92 angeordnet. Im Betrieb schiebt somit der Düsenkopf 90 das die Kamera aufnehmende Gehäuse 92 vor sich her, und das Gehäuse 92 bewegt sich gleitend durch das Nebenkanalrohr. Wahlweise kann das Gehäuse 92 mit Kufen aus gleitfähigem Material oder Rädern versehen sein, damit es leichter über Unebenheiten an der Innenfläche des Nebenkanalrohres hinweggleitet.

Die Führungsrollen 42 sind bei dem Ausführungsbeispiel nach Figur 6 nicht an der Lafette 26, sondern direkt an einer zu dem Gehäuse 78 gehörenden Muffe 94 gelagert.

Figur 7 zeigt ein Ausführungsbeispiel eines Umlenkgestells 96, das sich durch einen einfachen Aufbau auszeichnet. Dieses Umlenkgestell wird durch einen an den Innenquerschnitt des Hauptkanalrohres 10 angepaßten massiven zylindrischen Block 98 gebildet, der mittels einer Schubstange 100 in das Hauptkanalrohr einführbar ist. An der Rückseite ist der Block 98 abgeschrägt, und die abgeschrägte Stirnfläche bildet eine Ablenkfläche 102, durch die die in Figur 7 nicht gezeigte Kamerasonde in das abzweigende Nebenkanalrohr 12 umgelenkt wird. Im gezeigten Ausführungsbeispiel wird die Ablenkfläche 102 durch eine flache Höhlung gebildet, die auf der Seite des Nebenkanalrohres 12 zum Umfang des Blockes 98 hin offen ist und auf der Seite der Schubstange 100 flach ausläuft. Wenn die Kamerasonde auf die Ablenkfläche 102 aufläuft, wird der Block 98 mit Hilfe der Schubstange 100 festgehalten. Außerdem dient die Schubstange 100 dazu, den Block 98 jeweils so um seine Längsachse zu drehen, daß die Ablenkfläche 102 auf das abzweigende Nebenkanalrohr 12 gerichtet ist.

Wahlweise kann an dem Block 98 ein Spreizmechanismus vorgesehen sein, der sich durch eine zweite Schubstange betätigen läßt und dazu dient, den Block 98 in dem Hauptkanalrohr 10 zu verspannen. An den Spreizklauen des Spreizmechanismus können Rollen vorgesehen sein, die in Umfangsrichtung an der Innenfläche des Hauptkanalrohres 10 abrollen und beispielsweise durch Drehung der Schubstange angetrieben werden, so daß sich der Block 98 einfach und präzise um seine Längsachse drehen läßt.

Schließlich kann der Block 98 auch drehbar in einer nicht gezeigten Hülse gelagert sein, die sich ihrerseits axial in dem Hauptkanalrohrl0 bewegen läßt. Die Führungshülse kann an ihrem Umfang mit Kufen oder Rollen versehen sein, die sich an der Rohrwand abstützen.

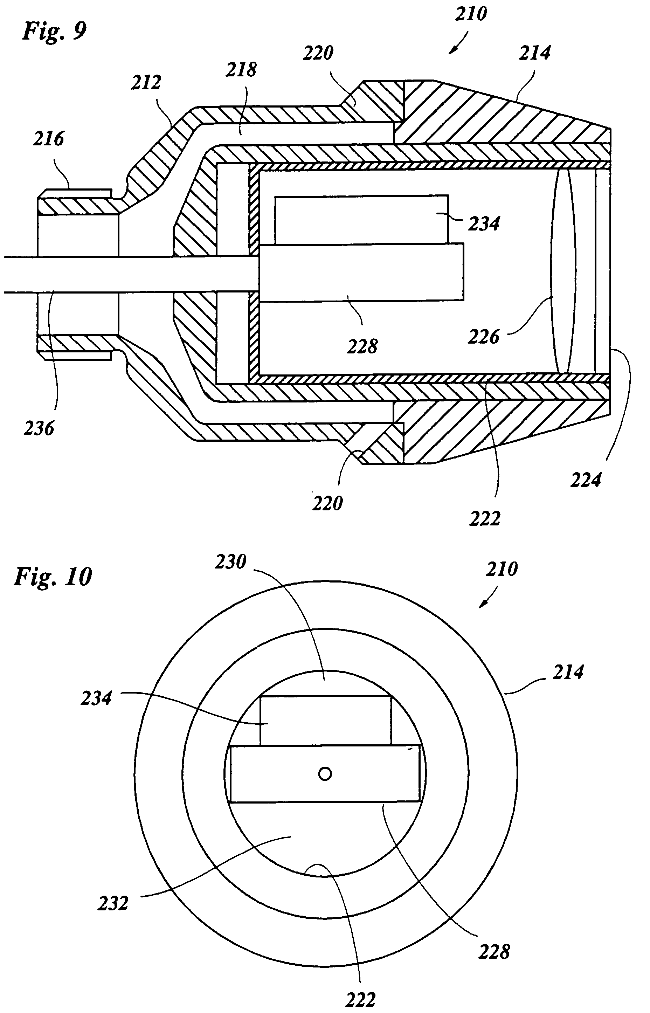

Wenn die Kamerasonde einen sehr weiten Wege im Hauptkanalrohr 10 zurücklegen muß, bevor sie den Abzweig des Nebenkanalrohres 12 erreicht, kann zur Überwindung des dann sehr großen Reibungswiderstandes des Schlauches anstelle der Antriebsrollen 44 aus Figur 4 auch die in Figur 8 gezeigte Anordnung verwendet werden. Bei dieser Anordnung ist das rückwärtige Ende des Schlauches 36 der Kamerasonde 24 an eine Schleppdüse 104 angeschlossen, die ihrerseits an einen Schlauch 106 mit größerem Querschnitt angeschlossen ist. Das Druckmedium wird über den Schlauch 106 zugeführt. Die Schleppdüse 104 enthält ein nicht gezeigtes Ventil, das erst bei einem bestimmten Mindestdruck anspricht, so daß ein Teil des Druckmediums in Form von nach hinten gerichteten Strahlen 108 von der Schleppdüse 104 abgegeben wird, während ein weiterer Teil des Druckmediums über den Schlauch 36 den Rückstoßdüsen 34 der Kamerasonde zugeführt wird.

Zunächst wird die Kamerasonde 24 mit Hilfe der Rückstoßdüsen 34 im Hauptkanalrohr vorgetrieben, wobei sie den Schlauch 36 nachzieht. Der Druck des Druckmediums ist dabei kleiner als der Öffnungsdruck des Ventils. Nachdem die Kamerasonde in einen Nebenkanal hineindirigiert wurde - beispielsweise mit dem in Figur 4 oder in Figur 7 gezeigten Umlenkgestell, wird der Druck des Druckmediums erhöht, so daß der Schlauch 106 durch den Rückstoß der Schleppdüse 104 im Hauptkanalrohr nachgezogen wird. Auf diese Weise kann mit Hilfe der Schleppdüse 104 eine hohe Vortriebskraft erzeugt werden, während im Nebenkanal mit dem flexibleren Schlauch 36 gearbeitet wird.

Nachfolgend werden Ausführungsbeispiele beschrieben, bei denen in die Kamerasonde ein Ortungsgerät integriert ist.

Eine herkömmliche Kamerasonde weist typischerweise ein im wesentlichen zylindrisches Kameragehäuse auf, das an einem axialen Ende durch das Kameraobjektiv und ggf. eine zusätzliche Schutzscheibe abgeschlossen ist. Im Inneren des zylindrischen Gehäuses befindet sich der eigentliche Kameramodul mit der Kameraelektronik. Dieser Modul ist üblicherweise auf einer Platine aufgebaut und hat demgemäß die Form einer flachen Platte, deren Breite dem Innendurchmesser des Kameragehäuses entspricht. Gemäß einer Ausführungsform der Erfindung ist das Ortungsgerät in einem der beiden segmentförmigen Hohlräume untergebracht, die beiderseits des Kameramoduls in dem zylindrischen Kameragehäuse gebildet werden.

In einer anderen Ausführungsform ist das Ortungsgerät in einem ringförmigen Gehäuse untergebracht, das einen Abschnitt des Gehäuses der eigentlichen Kamerasonde oder das am rückwärtigen Ende aus diesem Gehäuse austretende Kabel umgibt.

Häufig weist die Kamerasonde einen Kameraschlitten auf, der das eigentliche Kameragehäuse aufnimmt und zur Führung der Kamera in dem Kanalrohr dient. In diesem Fall kann das Ortungsgerät an oder in dem Kameraschlitten montiert sein.

Eine besonders kompakte Bauweise läßt sich dadurch erreichen, daß das Ortungsgerät unmittelbar an die Stromversorgung der Kamera angeschlossen ist, so daß auf sperrige Batterien zur Stromversorgung des Ortungsgerätes verzichtet werden kann. Zu diesem Zweck ist das Ortungsgerät so ausgelegt, daß es mit der Betriebsspannung der Kamera von beispielsweise 12 Volt arbeitet, oder es ist ein kleinbauender elektronischer Spannungsumsetzer vorgesehen, der die Betriebsspannung der Kamera auf die für das Ortungsgerät benötigte Spannung umsetzt.

Diese Lösung hat darüber hinaus den Vorteil, daß bei langwierigen Untersuchungen keine Unterbrechungen zum Auswechseln der Batterien für das Ortungsgerät erforderlich sind.

Sofern die Kamerasonde einen elektrisch angetriebenen Kamerawagen aufweist, kann auch der Antrieb des Kamerawagens an die gemeinsame Spannungsversorgung für die Kamera und das Ortungsgerät angeschlossen sein. Es sind bereits kompakte und entsprechend wendige Kamerasonden bekannt, bei denen der eigentliche Kamerakopf mit einer Steckkupplung lösbar auf einem Kamerawagen fixiert ist, wobei über die Steckkupplung zugleich die Betriebsspannung für den Antrieb des Kamerawagens von dem direkt an das Kamerakabel angeschlossenen Kamerakopf abgegriffen wird. Bei derartigen Kamerasonden kann das Ortungsgerät mit einer entsprechenden Steckkupplung zwischen dem Kamerakopf und dem Kamerawagen eingefügt sein. Umgekehrt ist es auch möglich, das Ortungsgerät getrennt von der Kamera an den Kamerawagen anzukuppeln, so daß das Ortungsgerät die Betriebsspan nung vom Kamerawagen erhält, der seinerseits über den Kamerakopf mit der Betriebsspannung versorgt wird. Vorzugsweise sind die elektrischen Steckkupplungen an dem Kamerakopf, dem Ortungsgerät und dem Kamerawagen so aneinander angepaßt, daß das Ortungsgerät wahlweise auch direkt an den Kamerakopf angekoppelt werden kann. Es besteht dann die Möglichkeit, den Kamerakopf mit Ortungsgerät wahlweise ohne Kamerawagen einzusetzen und beispielsweise mit Hilfe eines flexiblen Stabes im Kanalrohr vorzuschieben.

Die in Figur 9 gezeigte Kamerasonde 210 weist ein topfförmiges Gehäuse 212 auf, das am vorderen Ende durch ein kegelstumpfförmiges Endstück 214 abgeschlossen ist. Am rückwärtigen Ende des Gehäuses 212 ist eine Verschraubung 216 für einen nicht gezeigten Druckschlauch vorgesehen. In der Wand des Gehäuses 212 ist eine Ringkammer 218 ausgebildet, die am rückwärtigen Ende mit der Verschraubung 216 in Verbindung steht und am vorderen Ende mit schräg nach außen und nach hinten gerichteten Rückstoßdüsen 220 verbunden ist. Wenn über den Druckschlauch Wasser unter geeignetem Druck zugeführt wird, so wird das Wasser strahlförmig durch die Rückstoßdüsen 220 abgegeben, und hierdurch wird der Vortrieb der Kamerasonde 210 und zugleich die Zentrierung der Kamerasonde im Kanalrohr bewirkt.

Im vorderen Teil des Gehäuses 212 und des Endstücks 214 ist ein zylindrisches Kameragehäuse 222 untergebracht, das am vorderen Ende durch eine Schutzscheibe 224 abgeschlossen ist. Unmittelbar hinter der Schutzscheibe 224 ist das Kameraobjektiv 226 montiert. Ein Kameramodul 228, der nicht gezeigte elektrooptische Sensoren und die Kameraelektronik enthält, hat die Form eines flachen, plattenförmigen Bauteils und ist so in dem Kameragehäuse 222 montiert, daß er in einer Durchmesser-Ebene des Kameragehäuses liegt, wie in Figur 10 zu erkennen ist. Der Kameramodul 228 begrenzt somit in dem Kameragehäuse 222 zwei Hohlräume 230,232 mit kreissegmentförmigem Querschnitt.

Im gezeigten Ausführungsbeispiel ist ein Ortungsgerät 234 in dem Hohlraum 230 untergebracht. Wahlweise kann das Ortungsgerät jedoch auch in zwei Baugruppen aufgeteilt sein, von denen je eine in einem der Hohlräume 230 und 232 untergebracht ist. Auf diese Weise läßt sich das Ortungsgerät 234 raumsparend in dem Kameragehäuse 222 unterbringen.

Ein mit dem Kameramodul 228 verbundenes Kamerakabel 236 ist im gezeigten Beispiel flüssigkeitsdicht durch die Stirnwand des Gehäuses 212 geführt und verläuft durch das Innere der Verschraubung 216 und des nicht gezeigten Druckschlauches. Dieses Kamerakabel 236 dient einerseits zur Weiterleitung des Kamerasignals an einen nicht gezeigten Monitor und andererseits zur Spannungsversorgung des Kameramoduls 228 und des Ortungsgerätes 234.

Bei dem Ortungsgerät 234 handelt es sich beispielsweise um einen Langwellensender. Das Ortungsgerät kann jedoch auch durch einen Sender für elektromagnetische Wellen in einem anderen Frequenzbereich oder auch durch einen Ultraschallgeber oder dergleichen gebildet sein. Die nicht im einzelnen gezeigte Elektronik des Ortungsgerätes ist so ausgebildet, daß sie mit der gleichen Spannung betrieben werden kann wie der Kameramodul 228, also beispielsweise mit einer Gleichspannung von 12 Volt.

Alternativ kann das Ortungsgerät 234 jedoch auch wie herkömmliche Ortungsgeräte mit einer Betriebsspannung von 1,5 bis 1,7 Volt arbeiten. In diesem Fall kann die Betriebsspannung durch eine Batterie geliefert werden, die in dem Hohlraum 232 untergebracht ist.

Im gezeigten Beispiel hat der zylindrische Hohlraum in dem Gehäuse 212 und em Endstück 214, der zur Aufnahme des Kameragehäuses 222 zur Verfügung steht, eine Länge von etwa 100 mm und einen Durchmesser von etwa 40 mm. In jedem der kreissegmentförmigen Hohlräume 230,232 kann deshalb problemlos ein Ortungsgerät mit einer Länge von etwa 50 mm und einer Höhe von etwa 10 mm untergebracht werden.

Figur 11 zeigt eine modifizierte Ausführungsform der Kamerasonde 210, bei der zwischen der Verschraubung 16 und der Stirnwand des Gehäuses 212 ein rohrförmiger Schaft 238 ausgebildet ist. Auf diesem Schaft sitzt das Ortungsgerät 234, das in diesem Fall ein ringförmiges Gehäuse besitzt. Das ringförmige Gehäuse des Ortungsgerätes 234 besitzt im gezeigten Beispiel einen Innendurchmesser, der dem Außendurchmesser des Schaftes 238 entspricht, und einen Außendurchmesser, der dem Außendurchmesser des Gehäuses 212 entspricht.

Auch bei dieser Ausführungsform kann die Spannungsversorgung des Ortungsgerätes 234 wahlweise über eine Batterie, die in das Gehäuse des Ortungsgerätes integriert ist, oder über die Spannungsversorgung des Kameramoduls erfolgen. Im letzten Fall ist zwischen dem Kameragehäuse 222 und der Stirnwand des Gehäuses 212 eine mit dem Kamerakabel verbundene Anschlußklemme 240 angeordnet, die über eine Leitung 242 mit dem Ortungsgerät 234 verbunden ist. Die Leitung 242 verläuft beispielsweise durch in der Ringkammer des Gehäuses 212 ausgebildete radiale Stege 244 und ist so gegen die Wasserströmung geschützt.

Das Problem, eine Sonde in den vom Hauptkanal abzweigenden Nebenkanal einzuführen, stellt sich nicht nur bei der Feststellung von Schadstellen im Rahmen einer Kanaluntersuchung, sondern auch bei der anschließenden Ausbesserung solcher Schadstellen. Es sind verschiedenartige Arbeitsgeräte bekannt, die in ein Kanalrohr eingeführt werden sollen, um entsprechende Ausbesserungsarbeiten vorzunehmen. Zu diesem Geräten gehören insbesondere Greif-, Schneid- oder Fräswerkzeuge zum Entfernen von Fremdkörpern wie eingewachsenen Baumwurzeln und dergleichen, sowie Vorrichtungen zum Ausbessern von Schadstellen in der Kanalwand, beispielsweise zum Verfüllen von Rissen oder Löchern mit einer Füllmasse oder zum Auskleiden oder Ausspritzen der Innenfläche der Kanalwand mit einer Beschichtungsmasse. Eine abgewandelte Ausführungsform der erfindungsgemäßen Vorrichtung gestattet es, auch solche Arbeiten im Nebenkanalrohr vorzunehmen. Zu diesem Zweck wird das jeweils benötigte Arbeitsgerät an der rückstoßgetriebenen Sonde befestigt.

## Patentansprüche

1. Verfahren zur Untersuchung von Nebenkanälen, die von einem Hauptkanal abzweigen, bei dem eine Kamerasonde (24) vom Hauptkanalrohr (10) aus mit Hilfe eines Umlenkgestells (22;76;96) in das abzweigende Nebenkanalrohr (12) umgelenkt wird, dadurch **gekennzeichnet,** daß die Kamerasonde (24) mittels Rückstoß, durch Zufuhr eines Druckmediums zu an der Kamerasonde angebrachten Rückstoßdüsen (34;90) im Nebenkanalrohr (12) vorgetrieben wird.

2. Verfahren nach Anspruch 1, dadurch **gekennzeichnet,** daß an der Kamerasonde ein Ortungsgerät zur Abgabe von Ortungssignalen angebracht wird und daß man die Lage der in den Kanal eingeführten Kamerasonde anhand der Ortungssignale überirdisch vermißt.

3. Verfahren nach Anspruch 1, zur Durchführung von Ausbesserungs- oder Wartungsarbeiten in den Nebenkanälen, dadurch **gekennzeichnet,** daß ein Arbeitsgerät für die Ausbesserungs- oder Wartungsarbeiten an der Kamerasonde montiert wird.

4. Vorrichtung zur Durchführung des Verfahrens nach Anspruch 1 oder 2, mit einer Kamerasonde (24) und einem im Hauptkanalrohr (10) fixierbaren Umlenkgestell (22;76,96) zum Umlenken der Kamerasonde in den Nebenkanal, dadurch **gekennzeichnet,** daß die Kamerasonde (24) mit Rückstoßdüsen (34;90) versehen und an einen Schlauch (36) zur Zufuhr eines Druckmediums zu den Rückstoßdüsen angeschlossen ist.

5. Vorrichtung nach Anspruch 4, dadurch **gekennzeichnet,** daß die Rückstoßdüsen (34) an einem die Kamerasonde (24) an ihrem Umfang in Abstand zu ihrem vorderen Ende umgebenden Düsenkranz (32) ausgebildet und in bezug auf die Achse der Kanalsonde (24) schräg auswärts gerichtet sind.

6. Vorrichtung nach Anspruch 4 oder 5, dadurch **gekennzeichnet,** daß ein an die Kamerasonde (24) angeschlossenes Kamerakabel (40) in den Schlauch (36) integriert ist.

7. Vorrichtung nach einem der Ansprüche 4 bis 6, dadurch **gekennzeichnet,** daß das Umlenkgestell (96) durch einen zylindrischen Block (98) gebildet wird, an dem am rückwärtigen Ende exzentrisch eine Schubstange (100) befestigt ist und dessen rückwärtiges Ende eine schrägverlaufende Ablenkfläche (102) für die Kamerasonde (24) bildet.

8. Vorrichtung nach Anspruch 6, dadurch **gekennzeichnet,** daß das Umlenkgestell eine zur Aufnahme der Kamerasonde (24) ausgebildete rohrförmige Lafette (26) aufweist, die schwenkbar an einer Hauptkanalsonde (14;78) befestigt ist.

9. Vorrichtung nach Anspruch 8, dadurch **gekennzeichnet,** daß die Hauptkanalsonde (78) ein korbartiges, im wesentlichen zylindrisches Gestell ist, an dessen vorderem Ende die Lafette (26) mit einem Scharnier (84) schwenkbar befestigt ist und daß mit radial außerhalb des Scharniers (84) gelegenen Führungsösen (88) für ein Zugseil (86) zum Schwenken der Lafette versehen ist.

10. Vorrichtung nach Anspruch 8 oder 9, **gekennzeichnet** durch wenigstens eine an der Lafette (26) oder an der Hauptkanalsonde (14;76) angebrachte Führungsrolle (42) für den Schlauch (36).

11. Vorrichtung nach einem der Ansprüche 8 bis 10, **gekennzeichnet** durch ein in bezug auf die Hauptkanalsonde (14) schwenkbares Führungsorgan (54) zum Umlenken eines unabhängig von der Kamerasonde (24) in das Nebenkanalrohr (12) einführbaren Spülschlauches (52).

12. Vorrichtung nach Anspruch 11, dadurch **gekennzeichnet,** daß das Führungsorgan (54) eine an der Lafette (26) angebrachte Führungsrinne ist.

13. Vorrichtung nach einem der Ansprüche 8 bis 12, dadurch **gekennzeichnet,** daß an der Hauptkanalsonde (14) ein Antriebsmechanismus mit wenigstens einem Antriebsrollensatz (44;48) zum Nachfördern des Schlauches (36) und/oder des Spülschlauches (52) vorgesehen ist.

14. Vorrichtung nach einem der Ansprüche 8 bis 13, dadurch **gekennzeichnet,** daß die Lafette (26) einschließlich des zugehörigen Schwenkantriebs (30) sowie ggf. die Antriebsrollen (44,48) an einer parallel zur Achse des Hauptkanalrohres (10) verlaufenden Welle (16) montiert sind, die mittels eines Antriebsmotors (18) relativ zu der Hauptkanalsonde (14) um ihre Achse drehbar ist.

15. Vorrichtung nach einem der Ansprüche 8 bis 14, dadurch **gekennzeichnet,** daß die Hauptkanalsonde (14) mit sternförmig in Radialrichtung vorspringenden Rollenfüßen (58) versehen ist, die sich mit ihren freien Enden über antreibbare Rollensätze (60) an der Innenfläche des Hauptkanalrohres (10) abstützen.

16. Vorrichtung nach Anspruch 15, dadurch **gekennzeichnet,** daß die Rollenfüße (58) mittels eines durch die von dem Schlauch (36) und/oder dem Spülschlauch (52) auf die Hauptkanalsonde (14) ausgeübte Zugkraft betätigbaren Spreizmechanismus (72) radial gegen die Wand des Hauptkanalrohres (10) spannbar sind.

17. Vorrichtung nach einem der Ansprüche 4 bis 16, dadurch **gekennzeichnet,** daß der mit der Kamerasonde (24) verbundene Schlauch (36) mit seinem rückwärtigen Ende an eine weitere Düse (104) zur Erzeugung eines zusätzlichen Rückstoßes angeschlossen ist, die ihrerseits mit einem Schlauch (106) zur Zufuhr des Druckmediums verbunden ist und erst bei einem bestimmten Mindestdruck des Druckmediums wirksam wird.

18. Vorrichtung nach einem der Ansprüche 4 bis 17, dadurch **gekennzeichnet,** daß ein Ortungsgerät (234) in die Kamerasonde (210) integriert ist.

19. Vorrichtung nach Anspruch 18, dadurch **gekennzeichnet,** daß das Ortungsgerät (234) im Kameragehäuse (222) untergebracht ist.

20. Vorrichtung nach Anspruch 18, dadurch **gekennzeichnet,** daß das Ortungsgerät an oder in einem Kameraschlitten montiert ist, der das eigentliche Kameragehäuse aufnimmt.

21. Vorrichtung nach Anspruch 18, dadurch **gekennzeichnet,** daß das Ortungsgerät (234) und die Kameraelektronik (228) über ein Kamerakabel (236) an eine gemeinsame Stromversorgungsquelle angeschlossen sind.

## Claims

1. Process for inspecting subsidiary canals which branch off from a main drain, wherein a camera probe (24) is diverted from the main drain pipe (10) by means of a diverting frame (22; 76; 96) into the branching subsidiary canal pipe (12), characterised in that the camera probe (24) is driven in the subsidiary canal pipe (12) by reaction propulsion, by supplying a pressure medium to reaction propulsion nozzles (34; 90) attached to the camera probe.

2. Process according to Claim 1, characterised in that a locating device for transmitting locating signals is attached to the camera probe, and in that the position of the camera probe introduced into the canal is measured above ground with reference to the locating signals.

3. Process according to Claim 1 for carrying out repair or maintenance works in the subsidiary canals, characterised in that a working device for the repair or maintenance works is mounted on the camera probe.

4. Apparatus for carrying out the process according to Claim 1 or 2, having a camera probe (24) and a diverting frame (22; 76; 96), which can be secured in the main drain pipe (10), for diverting the camera probe into the subsidiary canal, characterised in that the camera probe (24) is provided with reaction propulsion nozzles (34; 90) and is connected to a flexible tube (36) for supplying a pressure medium to the reaction propulsion nozzles.

5. Apparatus according to Claim 4, characterised in that the reaction propulsion nozzles (34) are formed on a nozzle ring (32) surrounding the camera probe (24) at its circumference at a distance from its front end and are directed obliquely outwards relative to the axis of the canal probe (24).

6. Apparatus according to Claim 4 or 5, characterised in that a camera cable (40) connected to the camera probe (24) is integrated in the flexible tube (36).

7. Apparatus according to any one of Claims 4 to 6, characterised in that the diverting frame (96) is formed by a cylindrical unit (98) on the rear end of which a push rod (100) is secured eccentrically and the rear end of which forms an oblique deflecting face (102) for the camera probe (24).

8. Apparatus according to Claim 6, characterised in that the diverting frame has a tubular mount (26) which is formed to accommodate the camera probe (24) and which is secured pivotably to a main drain probe (14; 78).

9. Apparatus according to Claim 8, characterised in that the main drain probe (78) is a basket-like substantially cylindrical frame to the front end of which the mount (26) is pivotably secured with a hinge (84) and which is provided with guide rings (88) for a traction rope (86) for pivoting the mount, which rings are arranged radially outside the hinge (84).

10. Apparatus according to Claim 8 or 9, characterised by at least one guide roll (42) for the flexible tube (36), which guide roll is attached to the mount (26) or to the main drain probe (14; 76).

11. Apparatus according to any one of Claims 8 to 10, characterised by a guide member (54), which is pivotable relative to the main drain probe (14), for diverting a flexible flushing tube (52) which can be introduced into the subsidiary canal pipe (12) independently of the camera probe (24).

12. Apparatus according to Claim 11, characterised in that the guide member (54) is a guide channel attached to the mount (26).

13. Apparatus according to any one of Claims 8 to 12, characterised in that a drive mechanism having at least one drive roller set (44; 48) for feeding the flexible tube (36) and/or the flexible flushing tube (52) is provided on the main drain probe (14).

14. Apparatus according to any one of Claims 8 to 13, characterised in that the mount (26) including the associated pivot drive (30) and optionally the drive rollers (44, 48) are mounted on a shaft (16) which extends parallel to the axis of the main drain pipe (10) and which can be rotated about its axis relative to the main drain probe (14) by means of a drive motor (18).

15. Apparatus according to any one of Claims 8 to 14, characterised in that the main drain probe (14) is provided with roller feet (58) which project in a star shape in the radial direction and which are supported with their free ends via drivable roller sets (60) on the inner face of the main drain pipe (10).

16. Apparatus according to Claim 15, characterised in that the roller feet (58) can be clamped radially against the wall of the main drain pipe (10) by means of a spreading mechanism (72) which can be actuated by the tensile force exerted by the flexible tube (36) and/or the flexible flushing tube (52) on the main drain probe (14).

17. Apparatus according to any one of Claims 4 to 16, characterised in that the flexible tube (36) connected to the camera probe (24) is connected by way of its rear end to a further nozzle (104) for generating an additional reaction propulsion, which nozzle is for its part connected to a flexible tube (106) for supplying the pressure medium and becomes effective only at a specific minimum pressure of the pressure medium.

18. Apparatus according to any one of Claims 4 to 17, characterised in that a locating device (234) is integrated in the camera probe (210).

19. Apparatus according to Claim 18, characterised in that the locating device (234) is accommodated in the camera housing (222).

20. Apparatus according to Claim 18, characterised in that the locating device is mounted on or in a camera slide which accommodates the actual camera housing.

21. Apparatus according to Claim 18, characterised in that the locating device (234) and the electronic system (228) of the camera are connected by way of a camera cable (236) to a common power supply source.

## Revendications

1. Procédé d'inspection de canaux secondaires qui dérivent d'un égout principal, dans lequel une sonde de prise de vues (24) est déviée, à l'aide d'un châssis de déviation (22 ; 76 ; 96), de la canalisation (10) de l'égout principal dans la canalisation (12) du canal secondaire qui en dérive, caractérisé en ce que la sonde de prise de vues (24) est propulsée par réaction dans la conduite (12) du canal secondaire en amenant un fluide comprimé à des buses de réaction (34 ; 90) disposées sur la sonde de prise de vues.

2. Procédé selon la revendication 1, caractérisé en ce qu'un appareil de repérage est implanté sur la sonde de prise de vues pour fournir des signaux de repérage, et en ce que la position de la sonde de prise de vues introduite dans le canal est contrôlée en surface à l'aide des signaux de repérage.

3. Procédé selon la revendication 1, destiné à réaliser des travaux de réparation ou de maintenance dans les canaux secondaires, caractérisé en ce qu'un outil est monté sur la sonde de prise de vues pour réaliser les travaux de réparation ou de maintenance.

4. Dispositif pour mettre en oeuvre le procédé selon la revendication 1 ou 2, comprenant une sonde de prise de vues (24) et un châssis de déviation (22 ; 76 ; 96) pouvant être immobilisé dans la canalisation (10) de l'égout principal afin de dévier la sonde de prise de vues vers le canal secondaire, caractérisé en ce que la sonde de prise de vues (24) est munie de buses de réaction (34 ; 90) et est reliée à un flexible (36) pour amener un fluide comprimé aux buses de réaction.

5. Dispositif selon la revendication 4, caractérisé en ce que les buses de réaction (34) sont réalisées sur une couronne à buses (32) qui entoure la sonde de prise de vues (24) sur sa périphérie à distance de son extrémité avant et sont orientées en biais vers l'extérieur par rapport à l'axe de la sonde (24) du canal.

6. Dispositif selon la revendication 4 ou 5, caractérisé en ce qu'un câble de prise de vues (40) connecté à la sonde de prise de vues (24) est intégré au flexible (36).

7. Dispositif selon l'une des revendications 4 à 6, caractérisé en ce que le châssis de déviation (96) est formé par un bloc cylindrique (98), à l'extrémité arrière duquel une tige de poussée (100) est fixée en position excentrée et dont l'extrémité arrière forme une surface de déviation inclinée (102) pour la sonde de prise de vues (24).

8. Dispositif selon la revendication 6, caractérisé en ce que le châssis de déviation comporte un affût tubulaire (26) qui est conçu pour loger la sonde de prise de vues (24) et est fixé avec une possibilité de pivotement à une sonde (14 ; 78) de l'égout principal.

9. Dispositif selon la revendication 8, caractérisé en ce que la sonde d'égout principal (78) est un châssis sensiblement cylindrique en forme de corbeille, à l'extrémité avant duquel l'affût (26) est fixé avec une possibilité de pivotement à l'aide d'une charnière (84), et est munie d'oeillets de guidage (88) situés radialement à l'extérieur de la charnière (84) et destinés à un câble de traction (86) permettant de faire pivoter l'affût.

10. Dispositif selon la revendication 8 ou 9, caractérisé par au moins un galet de guidage (42) destiné au flexible (36) et monté sur l'affût (26) ou sur la sonde (14 ; 76) de l'égout principal.

11. Dispositif selon l'une des revendications 8 à 10, caractérisé par un organe de guidage (54) qui peut pivoter par rapport à la sonde (14) de l'égout principal et qui est destiné à dévier un flexible de rinçage (52) pouvant être introduit dans la conduite (12) du canal secondaire indépendamment de la sonde de prise de vues (24).

12. Dispositif selon la revendication 11, caractérisé en ce que l'organe de guidage (54) est une gouttière de guidage fixée à l'affût (26).

13. Dispositif selon l'une des revendications 8 à 12, caractérisé en ce qu'un mécanisme d'entraînement comprenant au moins un train de galets d'entraînement (44 ; 48) est prévu sur la sonde (14) de l'égout principal pour faire suivre le flexible (36) et/ou le flexible de rinçage (52).

14. Dispositif selon l'une des revendications 8 à 13, caractérisé en ce que l'affût (26), y compris le dispositif de pivotement correspondant (30), ainsi le cas échéant que les galets d'entraînement (44, 48) sont montés sur un arbre (16) qui s'étend parallèlement à l'axe de la canalisation (10) de l'égout principal et qui peut tourner autour de son axe par rapport à la sonde (14) de l'égout principal à l'aide d'un mécanisme d'entraînement (18).

15. Dispositif selon l'une des revendications 8 à 14, caractérisé en ce que la sonde (14) de l'égout principal est munie de bras à galets (58) qui dépassent radialement en formant une étoile et dont les extrémités libres prennent appui sur la surface intérieure de la canalisation (10) de l'égout principal par l'intermédiaire de trains de galets entraînés (60).

16. Dispositif selon la revendication 15, caractérisé en ce que les bras à galets (58) peuvent être appliqués radialement contre la paroi de la canalisation (10) de l'égout principal au moyen d'un mécanisme de déploiement (72) actionné par la force de traction exercée par le flexible (36) et/ou le flexible de rinçage (52) sur la sonde (14) de l'égout principal.

17. Dispositif selon l'une des revendications 4 à 16, caractérisé en ce que l'extrémité arrière du flexible (36) relié à la sonde de prise de vues (24) est reliée à une autre buse (104) qui est destinée à générer une réaction supplémentaire et qui, pour sa part, est reliée à un flexible (106) d'alimentation en fluide comprimé et ne fonctionne qu'en présence d'une pression minimale déterminée du fluide comprimé.

18. Dispositif selon l'une des revendications 4 à 17, caractérisé en ce qu'un appareil de repérage (234) est intégré à la sonde de prise de vues (210).

19. Dispositif selon la revendication 18, caractérisé en ce que l'appareil de repérage (234) est logé dans le boîtier de prise de vues (222).

20. Dispositif selon la revendication 18, caractérisé en ce que l'appareil de repérage est monté sur ou dans un chariot de prise de vues, dans lequel est placée le boîtier de prise de vues proprement dit.

21. Dispositif selon la revendication 18, caractérisé en ce que l'appareil de repérage (234) et l'électronique de prise de vues (228) sont connectés à une source commune d'alimentation en courant par un câble de prise de vues (236).
